# EUROPEAN PATENT SPECIFICATION

(11) **EP 1 334 851 B1**
(45) Date of publication and mention of the grant of the patent: **14.06.2006**
(21) Application number: 03001874.1
(22) Date of filing: 29.01.2003
(51) Int. Cl.: B60H 1/00

(54) **Air conditioner having engine cooling apparatus**
Klimaanlage mit Motorkühlung
Appareil de climatisation avec dispositif de refroidissement d'un moteur

(30) Priority: 06.02.2002 JP 2002029867
(43) Date of publication of application: 13.08.2003
(73) Proprietor: SANYO ELECTRIC CO., LTD., Moriguchi-shi, Osaka (JP); Sanyo Electric Air Conditioning Co., Ltd., Ashikaga-shi, Tochigi (JP)
(72) Inventor: Akatsuka, Kei, Ora-gun, Gunma (JP)
(74) Representative: Glawe, Delfs, Moll

(56) References cited:
- EP-A- 0 845 649
- EP-A- 1 108 575
- US-A- 5 529 116
- PATENT ABSTRACTS OF JAPAN vol. 015, no. 267 (M-1133), 8 July 1991 (1991-07-08) & JP 03 090430 A (ZEXEL CORP), 16 April 1991 (1991-04-16)

## Description

### BACKGROUND OF THE INVENTION

### 1. Field of the Invention

The present invention relates to an air conditioner having an engine for driving a compressor and an engine cooling apparatus for cooling the engine and enhancing the air conditioning power of the air conditioner by using exhaust heat from the engine.

### 2. Description of the Related Art

There is known a gas heat pump type air conditioner in which a compressor is driven by using an engine. Such a gas heat pump type air conditioner is equipped with an engine cooling apparatus for cooling the gas engine. The engine cooling apparatus supplies engine cooling water to the gas engine to cool the gas engine while circulating the engine cooling water in a cooling water pipe. The cooling water with which the gas engine is cooled is heated to a high temperature by exhaust heat from the gas engine, and then circulated in the cooling water pipe. Furthermore, the air conditioning power, particularly, the power under heating operation of the air conditioner can be enhanced by heating the refrigerant of the air conditioner. Therefore, it is expected that the refrigerant is heated with the heat of the high-temperature cooling water (the exhaust heat of the engine) to enhance the air conditioning power under heating operation.

More specifically, in such a gas heat pump type air conditioner as described above, the air conditioning power (heating power) of the air conditioner is enhanced by heating the refrigerant at the suction side of the compressor of the air conditioner or heating the refrigerant flowing through an outdoor heat exchanger of the air conditioner with the heat of the high-temperature cooling water circulated in the cooling water pipe, for example.

When the refrigerant flowing through the outdoor heat exchanger is heated with the heat of the cooling water, a fin-and-tube type heat exchanger constructed by refrigerant pipes (heat-transfer pipes for refrigerant) and cooling water pipes (heat-transfer pipes for cooling water) and serving both as an outdoor heat exchanger for refrigerant and as a radiator for high-temperature cooling water is used as an outdoor heat exchanger for an air conditioner. In this fin-and-tube type heat exchanger, the heat exchange between the refrigerant and the high-temperature cooling water is carried out through air flowing through the outdoor heat exchanger, so that the refrigerant is heated and the high-temperature cooling water is cooled.

The fin-and-tube structure of the outdoor heat exchanger as described above is achieved by arranging refrigerant pipes and cooling water pipes in one body, and the heat exchange between heat media (refrigerant and cooling water) flowing in the pipes is performed through air while the air is made to flow in the thickness direction of the fin-and-tube structure. The fin-and-tube structure is convenient for the outdoor heat exchanger because it enables the outdoor heat exchanger to function both as an outdoor heat exchanger for refrigerant and as a radiator for high-temperature cooling water from a gas engine and also it makes it possible to manufacture the outdoor heat exchanger for refrigerant and the radiator as one body and thus dispose them in a small space.

In order to enhance the efficiency of the heat-transfer from the high-temperature cooling water to the refrigerant through the air under heating operation, the conventional outdoor heat exchangers have been hitherto designed to have such a fin-and-tube structure that the cooling water pipes (array) are located at some intermediate position in the thickness direction of the outdoor heat exchanger so as to be interposed between the refrigerant pipes (arrays). The intermediate position corresponds to a position other than the outermost position (the air flow-in side position) and the innermost position (the air flow-out side position) of the outdoor heat exchanger. That is, the cooling water pipes (pipe array) must be interposed between the refrigerant pipes (pipe arrays) located at the flow-in and flow-out sides of the outdoor heat exchanger in the air flowing direction.

The above pipe array arrangement is required to heat the air flowing through the outer heat exchanger through the heat exchange between the high-temperature cooling water in the cooling water pipes and the air and then heat the refrigerant in the refrigerant pipes located at the downstream side of the cooling water pipes with the heated air.

For example, in the case of an outdoor heat exchanger having a fin-and-tube structure in which four pipe arrays are arranged in the air flowing direction, a cooling water pipe array is disposed at a third array position from the air flow-in side, and refrigerant pipe arrays are disposed at first, second and fourth array positions from the air flow-in side. Here, the first array position corresponds to the air flow-in side, the fourth array position corresponds to the air flow-out side and the second and third array positions correspond to the positions located between the first and fourth array positions in this order.

In this case, under heating operation, the heat of the high-temperature cooling water in the cooling water pipe array located at the third array position is transferred to the refrigerant in the refrigerant pipe array at the downstream side of the cooling water pipe array with respect to the air flowing direction (i.e., the refrigerant in the refrigerant pipe array is located at the fourth array position) to heat the refrigerant, so that the heating power of the air conditioner can be enhanced. However, such a fin-and-tube structure has the problem that the heat of the high-temperature cooling water in the cooling water pipe array is likewise transferred to the refrigerant in the refrigerant pipe array at the downstream side of the cooling water pipe array even under cooling operation (for example, the temperature of the refrigerant in an condenser under cooling operation is normally equal to about 50°C, however, the temperature of the cooling water is equal to a temperature higher than that of the refrigerant by 20°C or more). This causes increase in condensation temperature (saturation temperature, saturation pressure) of the refrigerant and thus reduces the cooling power.

As described above, the fin-and-tube structure itself is very convenient because this structure enables a single heat exchanger to function both as an outdoor heat exchanger for refrigerant and as a radiator for high-temperature cooling water, and thus the setup space of the outdoor heat exchanger and the radiator can be reduced. In addition, only one outdoor fan is commonly used to the outdoor heat exchanger and the radiator and thus the air conditioner using the fin-and-tube structure is lower in cost. However, this structure has the problem that the heat of the high-temperature cooling water in the cooling water pipe array is transferred to the refrigerant in the refrigerant pipe array at the downstream side of the cooling water pipe array under cooling operation and thus the cooling power under cooling operation is still reduced.

A heat pump conditioner according to the preamble part of claim 1 is known from EP A1 108 575.

### SUMMARY OF THE INVENTION

The present invention has been implemented in view of the foregoing situation, and has an object of the present invention to provide an air conditioner which can suppress reduction in cooling power under cooling operation even when a fin-and-tube structure is used for an outdoor heat exchanger and a cooling water heat exchanger (radiator) in a heat pump type air conditioner.

This object is solved by the features of the main claim.

Advantageous embodiments are shown in the subclaims.

### BRIEF DESCRIPTION OF THE DRAWINGS

Fig. 1 is a diagrams showing a refrigerant circuit according to an embodiment of a heat pump type air conditioner of the present invention;
Fig. 2 is a side view (a view taken from a pipe plate side) of an outdoor air heat exchanger used in the heat pump type air conditioner when an outdoor heat exchanger and a cooling-water heat exchanger are formed integrally with each other, that heat exchanger not forming part of the invention, but is useful for understanding
Fig. 3 is a side view (a view taken from the pipe plate side) of each heat exchanger when an outdoor heat exchanger and a cooling-water heat exchanger are formed separately from each other;
Fig. 4 is a diagram showing fixing means for fixing the outdoor heat exchanger (refrigerant heat exchanger) and the cooling-water heat exchanger to each other shown in Fig. 3; and
Fig. 5 is a diagram showing the fixing state of the refrigerant heat exchanger and the cooling-water heat exchanger fixed by the fixing means, which is taken from the upper side.

### DETAILED DESCRIPTION OF THE PREFERRED EMBODIMENTS

Preferred embodiments according to the present invention will be described hereunder with reference to the accompanying drawings.

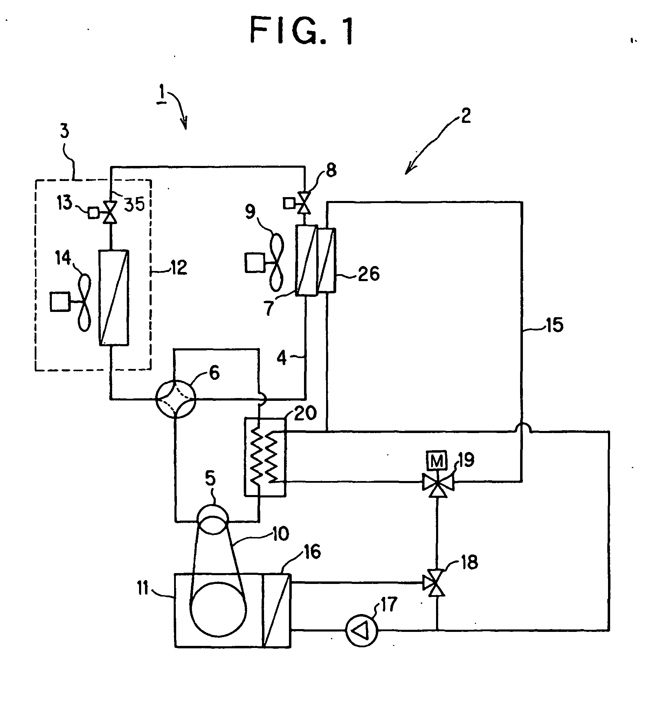

Fig. 1 is a circuit diagram showing a refrigerant circuit, etc. in an embodiment of a heat pump type air conditioner according to the present invention.

As shown in Fig. 1, a heat pump type air conditioner 1 according to this embodiment has an outdoor unit 2, an indoor unit 3 and a controller (not shown). The outdoor refrigerant pipe 4 of the outdoor unit 2 is connected to the indoor refrigerant pipe 35 of the indoor unit 3. The outdoor unit 2 is disposed outdoor, a compressor 5 is disposed in the outdoor refrigerant pipe 4 and a four-way valve 6 is disposed at the discharge side of the compressor 5. An outdoor heat exchanger 7 and an outdoor expansion valve 8 are successively disposed in this order at the side of the four-way valve 6. An outdoor fan 9 for blowing air to the outdoor heat exchanger 7 is disposed in the vicinity of the outdoor heat exchanger 7. The compressor 5 is linked to a gas engine 11 through driving force transmitting means 10 such as a timing belt or the like, and driven by the gas engine 11.

Furthermore, the indoor unit 3 is disposed indoor. An indoor heat exchanger 12 is disposed in the indoor refrigerant pipe 5, and an indoor expansion valve 13 is disposed in the neighborhood of the indoor heat exchanger 12 in the indoor refrigerant pipe 5. An indoor fan 14 for blowing air to the indoor heat exchanger 12 is disposed in the vicinity of the indoor heat exchanger 12.

By switching the four-way valve 6, the heat pump type air conditioner 1 is set to a cooling operation mode or a heating operation mode. That is, when the four-way valve 6 is switched to the cooling side, the refrigerant flows as indicated by a solid line, and the indoor heat exchanger 7 functions as a condenser while the indoor heat exchanger functions as an evaporator, so that the air conditioner is set to the cooling operation state and the indoor heat exchanger 12 cools the room. On the other hand, when the four-way valve 6 is switched to the heating side, the refrigerant flows as indicated by a broken line, and the indoor heat exchanger 12 functions as a condenser while the outdoor heat exchanger 7 functions as an evaporator, so that the air conditioner is set to the heating operation state and the indoor heat exchanger 12 heats the room.

Under cooling operation, the valve opening degree of the indoor expansion valve 13 is controlled in accordance with an air conditioning load, and under heating operation, the valve opening degrees of the outdoor expansion valve 8 and the indoor expansion valve 13 are controlled in accordance with an air conditioning load.

The gas engine 11 for driving the compressor 5 is cooled by engine cooling water circulated in a cooling water pipe 15 of an engine cooling apparatus disposed in the outdoor unit 2. The cooling water pipe 15 of the engine cooling apparatus is connected to an exhaust-gas heat exchanger 16 attached to the gas engine 11. The cooling water flows from the discharge side of the cooling water pump 17 into the exhaust-gas heat exchanger 16 of the gas engine 11 to withdraw the exhaust heat (the heat of the exhaust gas) of the gas engine 11, and then flows into the gas engine 11 to cool the gas engine 11. At the same time, the cooling water is heated to about 80°C by the gas engine 11. That is, the gas engine 11 is cooled by the cooling water while the cooling water is heated to a high temperature and circulated in the cooling water pipe 15.

When the temperature of the cooling water flowing from the gas engine 11 to a wax three-way valve 18 is low (for example, less than 80°C), the cooling water is returned from the outlet port at the low-temperature side of the wax three-way valve 18 to the cooling water pump 17 to quickly heat the machine body of the gas engine 11. On the other hand, when the temperature of the cooling water is high (for example, 80°C or more), the cooling water flowing from the gas engine 11 to the wax three-way valve 18 flows from the outlet port at the high-temperature side of the wax three-way valve 18 to a three-way valve 19.

Here, under heating operation, the high-temperature cooling water (for example, 80°C or more) flowing into the three-way valve 19 is made to selectively flow into a refrigerant heat exchanger 20 to heat the refrigerant at the suction side of the compressor 5 with the heat of the cooling water by the three-way valve 19. The refrigerant heat exchanger 20 is disposed at the suction side of the compressor. One end of a refrigerant pipe equipped in the refrigerant heat exchanger 20 is connected to the outdoor refrigerant pipe 4 while the other end of the refrigerant pipe is connected to the suction port of the compressor 5. Furthermore, one end of a cooling water pipe equipped in the refrigerant heat exchanger 20 is connected to the three-way valve 19, and thus the high-temperature cooling water flows through the three-way valve 19 into the cooling water pipe of the refrigerant heat exchanger 20 to thereby heat the refrigerant at the suction side of the compressor 5.

As described above, the heat exchange is performed between the high-temperature cooling water and the refrigerant in the refrigerant heat exchanger 20, so that the refrigerant is heated by the heat of the high-temperature cooling water (i.e., the exhaust heat of the gas engine) and then supplied to the compressor. On the other hand, the cooling water is reduced in temperature due to the heat exchange with the refrigerant, and is made to flow from the refrigerant heat exchanger 20 through the cooling water pipe into the gas engine 11 by a cooling water (circulating) pump 17 again.

As described above, under heating operation, the three-way valve 19 carries out the switching operation so that the high-temperature cooling water from the gas engine 11 flows to the refrigerant heat exchanger 20. On the other hand, under cooling operation, the three-way valve 19 carries out the switching operation so that the high-temperature cooling water from the gas engine 11 flows into a cooling-water heat exchanger 26 (serving as radiator) which is formed integrally with or assembled with the outdoor heat exchanger 7 as described later.

Here, a plate type heat exchanger may be used as the refrigerant heat exchanger 20 in order to enhance the heat exchanger effectiveness between the refrigerant and the high-temperature cooling water and thus further enhance the heating power.

As described above, under cooling operation, the high-temperature cooling water flows from the three-way valve 19 into the cooling-water heat exchanger 26. As described later, under cooling operation, no heat exchange is carried out between the refrigerant in the outdoor heat exchanger 7 and the cooling water in the cooling-water heat exchanger 26 through air, and the outdoor heat exchanger 7 functions as only a condenser for the refrigerant while the cooling-water heat exchanger 26 functions as only a radiator for the high-temperature cooling water. Accordingly, as compared with the conventional air conditioner using the fin-and-tube structure, the cooling power can be enhanced.

In the case of the structure that the cooling-water heat exchanger 26 is integrally installed in the outdoor heat exchanger 7, these heat exchangers can be regarded as a single outdoor heat exchanger functioning as both of the refrigerant condenser and the cooling-water radiator (in the following description, such an integral type heat exchanger will be referred to as an outdoor heat exchanger 7-1).

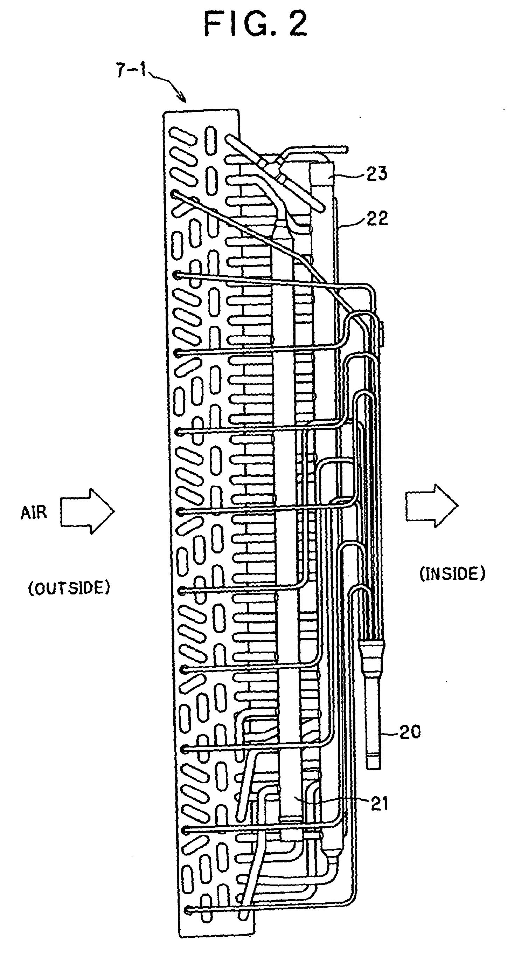

Fig. 2 is a side view (view taken from a pipe plate side) of an embodiment of an outdoor air heat exchanger when the outdoor heat exchanger 7 and the cooling-water heat exchanger 26 used in the heat pump type air conditioner shown in Fig. 1 are formed integrally with each other.

The outdoor air heat exchanger 7-1 of this embodiment has a fin-and-tube structure including four pipe arrays (lines) arranged so that the refrigerant pipes and the cooling water pipes are arranged in the array form so as to cross the fins and the pipe arrays thus arranged are stacked in the thickness direction of the outdoor air heat exchanger 7-1(i.e., the air flowing direction). In Fig. 2, the left edge of the outdoor air heat exchanger 7-1 corresponds to the air blow-in side (outside), and the right edge of the outdoor air heat exchanger 7-1 corresponds to the air blow-out side (inside). By driving the outdoor fan 9, the air is blown into the outdoor air heat exchanger 7-1 from the let side, passed through the outdoor air heat exchanger 7-1 while the heat exchange between the air and the refrigerant in the refrigerant pipes and the heat exchange between the air and the high-temperature cooling water in the cooling water pipes are performed, and finally blown out to the right side in Fig. 2.

In the outdoor air heat exchanger 7-1 shown in Fig. 2, the cooling-water pipes are disposed at the position of the innermost pipe array (the rightmost position of Fig. 2) of the four pipe arrays. That is, the array of the cooling water pipes (the cooling water pipe array) is disposed at the most downstream side with respect to the air flowing direction. Accordingly, even when the high-temperature cooling water flows into the cooling water pipe of the outdoor air heat exchanger 7-1 under cooling operation, the air which is heat-exchanged with the high-temperature cooling water and thus heated to a high temperature is just blown out to the air blow-out side without coming into contact with the refrigerant pipes. Accordingly, the refrigerant flowing in all the refrigerant pipes of the outdoor air heat exchanger 7-1 is not heated, and thus no reduction of the cooling power is induced even when the heat of the high-temperature cooling water is radiated by using the outdoor air heat exchanger 7-1 under cooling operation (i.e., by using the outdoor air heat exchanger 7-1 as a radiator).

In Fig. 2, reference numerals 20 and 21 represent a refrigerant liquid pipe (functioning as the outlet port of the condenser under cooling operation) and a refrigerant gas pipe (functioning as an inlet port of the condenser under cooling operation) respectively, and reference numerals 22 and 23 represent a cooling water flow-in pipe and a cooling water flow-out pipe, respectively. As is apparent from Fig. 2, it is unnecessary to dispose cooling water pipes over the whole area at the innermost pipe array position (the pipe array position at the rightmost side), That is, it is unnecessary that the cooling water pipes are sequentially arranged in the vertical direction at the innermost pipe position (corresponding to the fourth pipe array position). For example, these cooling water pipes may be sequentially or intermittently arranged in some suitable area or at some suitable positions in the vertical direction (Fig. 2) insofar as the cooling water pipes function as a radiator.

Furthermore, as shown in Fig. 2, some refrigerant pipes connected to the refrigerant liquid pipe 20 and the refrigerant gas pipe 21 may be intermittently located at the innermost pipe array position (in the vertical direction at the rightmost side of the pipe plate in Fig. 2). In short, any pipe arrangement may be adopted insofar as no refrigerant pipe is located at the downstream side of the cooling water pipes with respect to the air flowing direction. In other words, no cooling water pipe is located at the upstream side of any refrigerant water pipe with respect to the air flowing direction. In Fig. 2, a diffluent type heat exchanger is used, however, the present invention is not limited to this type.

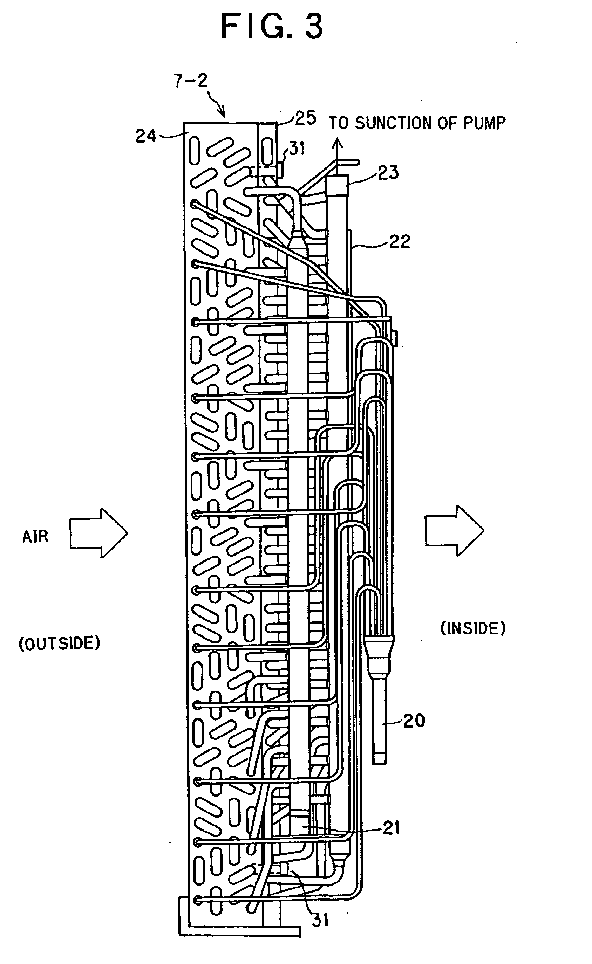

Fig. 3 is a side view (taken along the pipe plate side) of an outdoor heat exchanger according to a second embodiment when the outdoor heat exchanger 7 and the cooling water heat exchanger 26 are formed separately from each other, however, assembled to each other. An assembly of the outdoor heat exchanger 7 and the cooling water heat exchanger 26 that are not formed integrally with each other will be hereinafter referred to as an outdoor air heat exchanger 7-2.

Reference numerals 20 and 21 represent a refrigerant liquid pipe and a refrigerant gas pipe respectively, and reference numerals 22 and 23 represent a cooling water flow-in pipe and a cooling water flow-out pipe respectively.

The outdoor air heat exchanger 7-2 is designed so that the refrigerant pipes (refrigerant pipe arrays) and the cooling water pipes (cooling pipe array) are disposed completely separately from each other, and this embodiment is characterized in that fins through which the refrigerant pipe arrays are mounted to penetrate are separated from fins through which the cooling water array is mounted to penetrate.

In the outdoor air heat exchanger 7-1 of Fig. 2, the refrigerant pipes and the cooling water pipes are mounted so as to penetrate through the same fins, and the heat of the high-temperature cooling water is somewhat transferred to the low-temperature refrigerant through the fins, so that the heating of the refrigerant cannot be perfectly prevented. However, according to this embodiment, the fins for the refrigerant pipes and the cooling water pipes are perfectly separated from each other, and thus the heat transfer from the high-temperature cooling water to the low-temperature refrigerant can be prevented.

The outdoor air heat exchanger 7-2 of Fig. 3 comprises a refrigerant heat exchanger 24 having a fin-and-tube structure of four pipe arrays (for refrigerant) and a cooling water heat exchanger (radiator) 25 having a fin-and-tube structure of one pipe array (for cooling water) which is disposed at the downstream side of the fin-and-tube structure for the refrigerant with respect to the air flowing direction to be laminated on the fin-and-tube structure for the refrigerant.

All the refrigerant pipes are arranged at all the pipe array positions (from first pipe array position to fourth pipe array position) of the refrigerant heat exchanger 24. The refrigerant heat exchanger 24 functions as an evaporator under heating operation, and also functions as a condenser under cooling operation. All the cooling water pipes are arranged at the pipe array position of the cooling water heat exchanger 25 (in this case, the cooling water pipes constitute only one cooling water pipe array). The cooling water heat exchanger 25 functions as a radiator for high-temperature cooling water under cooling operation. As described later, the refrigerant heat exchanger 24 and the cooling water heat exchanger 25 are fixed to each other by fixing means, so that they are prevented from being positionally displaced from each other or separated from each other when they are carried or some impact is applied thereto.

As described above, the cooling water heat exchanger 25 is disposed at the downstream side of the refrigerant heat exchanger 24 with respect to the air flowing direction. Therefore, as in the case of the outdoor air heat exchanger of Fig. 2, under cooling operation, the heat of the high-temperature cooling water in the cooling water pipes can be prevented from being transferred to the refrigerant in the refrigerant pipes, so that the heat of the high-temperature cooling water can be radiated without inducing reduction in cooling power.

Furthermore, since the refrigerant heat exchanger 24 and the cooling water heat exchanger 25 are separated from each other, the heat transfer from the high-temperature cooling water to the low-temperature refrigerant through the fins can be avoided.

Comparing the construction of the outdoor air heat exchanger 7-2 of Fig. 3 with the construction of the outdoor air heat exchanger 7-1 of Fig. 1, the number of the pipe arrays of the outdoor air heat exchanger 7-2 of Fig. 3 is larger by one pipe array (the amount corresponding to one cooling water heat exchanger). In this case, when the pitch of the fins constituting the refrigerant heat exchanger 24 is set to be equal to the pitch of the fins constituting the cooling water heat exchanger 25, the air resistance is increased as compared with the outdoor air heat exchanger 7-1 of Fig. 2.

With respect to the heat exchange between the refrigerant and the air, as the fin pitch (the interval of fins) is smaller, the air resistance is increased more and more and the heat exchange effectiveness with the air is more enhanced, so that it is preferable to reduce the fin pitch. However, with respect to the heat exchange between the cooling water and the air, as the fin pitch is smaller, the air amount of the air flowing through the cooling water heat exchanger is reduced, and the radiation efficiency of the cooling water is reduced, so that it is not preferable to reduce the fin pitch.

The inventor of this application has been dedicated to making studies on this point, and comes to the conclusion that the heat transfer capability and the air flowing resistance can be matched with the fluid to be heat exchanged with keeping the air flowing area of the heat exchange common by varying the fin pitch (the interval of the fins), the shape of the fins or the like between the two heat exchangers (the refrigerant heat exchanger and the cooling water heat exchanger). For example, the inventor has discovered that if the fin pitch of the cooling water heat exchanger disposed at the down stream side is rougher (larger) than that of the refrigerant heat exchanger, there could be achieved such an effect that the air resistance can be suppressed and the heat exchange effectiveness of the cooling water can be enhanced without reducing the air flow amount.

As a specific example, when the outdoor air heat exchanger 7-2 of Fig. 3 (the refrigerant heat exchanger comprises four refrigerant pipe arrays and the cooling water heat exchanger comprises one cooling water pipe array) is used and the fin pitch of the refrigerant heat exchanger 24 is set to 1.8mm, the above effect can be achieved by setting the fin pitch of the cooling water heat exchanger 25 to about 3mm. In general, when the fin pitch of the refrigerant heat exchanger 24 is represented by P1 and the fin pitch of the cooling water heat exchanger 25 is represented by P2, by setting the fin pitches P1 and P2 so as to satisfy the condition: P2/P1≥ 3/1.8, a sufficient air flow amount can be achieved in the cooling water heat exchanger while suitable air resistance is kept in the refrigerant heat exchanger. Accordingly, even when the number of pipe arrays of the refrigerant heat exchanger is increased, the air flow amount in the cooling water heat exchanger is not reduced, and thus the sufficient radiation effect can be achieved.

The numbers of the refrigerant pipe arrays and the cooling water pipe arrays are not limited to the above embodiment of Fig. 3 (the former: four pipe array and the latter : one pipe array), and they may be varied in design. In this case, the radiation effect of the high-temperature cooling water can be kept by setting the fin pitch ratio (P2/P1) to a proper value so that the air flow amount in the cooling water heat exchanger is not reduced.

As described above, the influence on the radiation effect of the cooling water heat exchanger by the increase of the air resistance due to the increase in number of refrigerant pipe arrays can be avoided by adjusting the fin pitch ratio of the refrigerant heat exchanger and the cooling water heat exchanger. The effect on the radiation effect by the increase of the refrigerant pipe arrays can be avoided not only by adjusting the fin pitch ratio, but also by varying the fin shape. That is, the same effect can be achieved by designing the fin shape of the cooling water heat exchanger so that the air flow amount is increased.

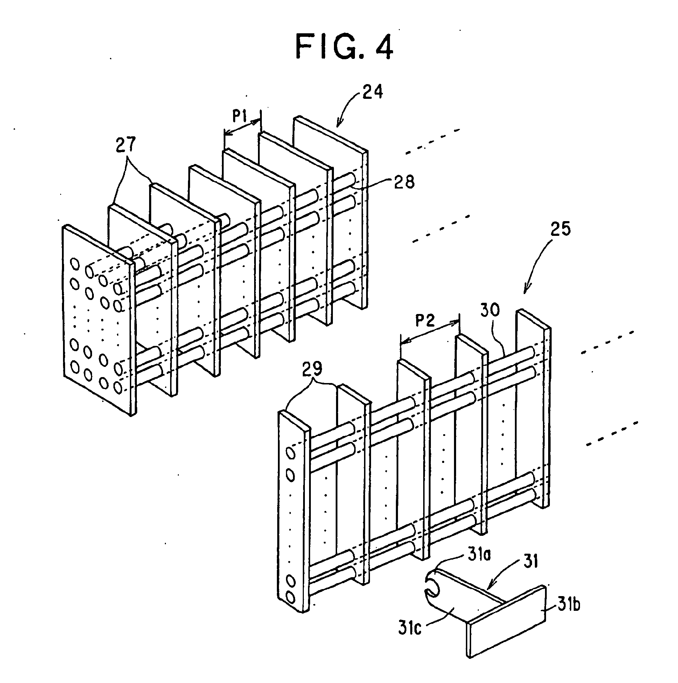

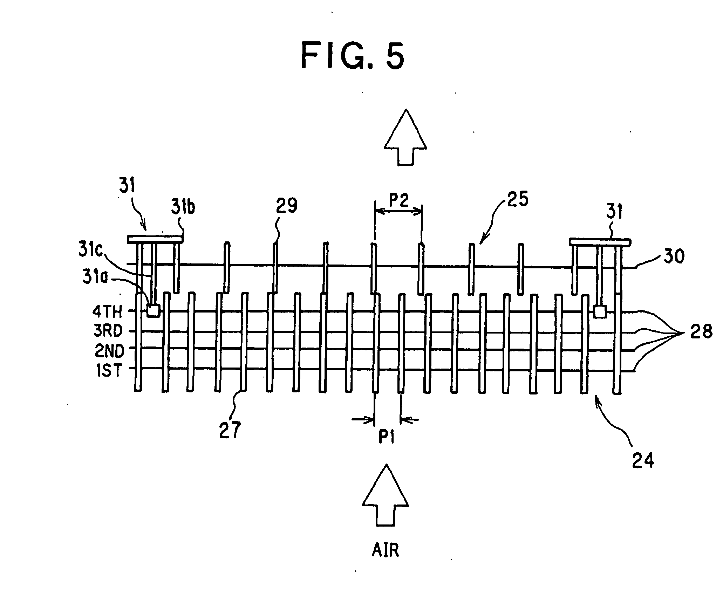

Fig. 4 is a perspective view showing the refrigerant heat exchanger 24 and the cooling water heat exchanger 25 shown in Fig. 3 before they are fixed to each other by fixing means, and Fig. 5 is a top view showing the fixed assembly of the refrigerant heat exchanger 24 and the cooling water heat exchanger 25.

In Fig. 4 and 5, reference numeral 27 represents the fins constituting the refrigerant heat exchanger 24, and reference numeral 28 represents the refrigerant pipes which are mounted so as to penetrate through the fins 27. Reference numeral 29 represents the fins constituting the cooling water heat exchanger 25, and reference numeral 30 represents the cooling water pipes which are mounted so as to penetrate through the fins 29. Reference numeral 31 represents fixing means for fixing the refrigerant heat exchanger 24 (fins 27) and the cooling water heat exchanger 25 (fins 29) to each other.

As shown in Figs. 4 and 5, the fixing means 31 comprises a hook portion 31 which can be hooked to one (some) of the refrigerant pipes 28 at one end thereof, a base portion 31b which can come into contact with the side surface of at least one fin 29 of the cooling water heat exchanger 25, and an intermediate portion 31c located between the hook portion 31a and the base portion 31b. The fixing between the refrigerant heat exchanger 24 and the cooling water heat exchanger 25 is performed by pressing the fixing means 31 to the refrigerant heat exchanger 24 (to the left side of Fig. 3) under the state that at least one fin 29 abuts against the base portion 31b until the hook portion 31a of the fixing means 31 is hooked to a refrigerant pipe(s) 28 mounted so as to penetrate through the fins of the refrigerant heat exchanger 24. Accordingly, the cooling water heat exchanger 24 is fixed to the refrigerant heat exchanger 24 with being clamped between the refrigerant heat exchanger 24 and the fixing means 31 as shown in Fig. 5.

Here, the fixing of the fixing means 31 is not limited to one position, and it may be carried out at plural places to stabilize the fixing state. In this case, for example, the fixing may be performed at plural positions in the up-and-down direction of each of both the sides of the refrigerant and cooling water heat exchangers 24 and 25 in the arrangement direction of the fins by using plural fixing means 31 to more stabilize the fixing between the refrigerant heat exchanger 24 and the cooling water heat exchanger 25. Furthermore, when the length of one side of the base portion of the fixing means 31 is set so that the base portion can abut against at least two neighboring fins 29 (that is, the length of one side of the base portion in the fin arrangement direction is set to be longer than the fin pitch of the fins 29), the refrigerant heat exchanger 24 and the cooling water heat exchanger 25 can be more stably fixed to each other.

The shape of each of the hook portion 31a, the base portion 31b and the intermediate portion 31c of the fixing means 31 is not limited to a specific shape. However, the intermediate portion 31c is required to be long so that the hook portion 31a can be hooked to the refrigerant pipe 28 under the state that the base portion 31b abuts against the side surface of the fin of the cooling water heat exchanger 25.

In the above-described embodiments, the number of pipe arrays of the outdoor air heat exchanger is equal to 4 or 5 (containing the cooling water pipe array), however, the present invention is not limited to these numbers, and the number of pipe arrays may be suitably varied in accordance with the design condition of the refrigerant circuit, etc. In addition, the number of refrigerant pipes and the number of cooling waters are not limited to specific ones. That is, these numbers may be equal to 1 or more. Furthermore, the fin pitch of the present invention is not limited to that of the above embodiments (1.8mm, 3.0mm), and the fin pitches may be varied in accordance with various design conditions. In this case, the effect of the present invention can be more enhanced by setting the fin pitch of the cooling water heat exchanger to a value larger than the fin pitch of the refrigerant heat exchanger.

Furthermore, in the above-described embodiment, the shape of the hook portion 31a of the fixing means is designed in a C-shape in section, however, any shape may be adopted for the hook portion 31a insofar as the dimension of the inner space (the diameter of the C-shape) of the hook portion 31a is set so that the hook portion 31a can be fixedly hooked to at least one refrigerant pipe.

As described above, according to the heat pump type air conditioner of the present invention, all the cooling water pipes are arranged at the downstream side of the refrigerant pipes with respect to the air flowing direction in the outdoor heat exchanger side. Therefore, the air heated through the heat exchange with the high-temperature cooling water in the cooling water pipes is blow out to the outdoor heat exchanger without coming into contact with the refrigerant pipes, so that the cooling power under cooling operation is not reduced, and thus the cooling power can be enhanced as compared with the conventional heat pump type air conditioner.

## Claims

1. A heat pump type air conditioner (1) including a refrigerant circuit having a compressor (5), an indoor heat exchanger (12), a pressure-reducing device (8), an outdoor heat exchanger (7) having at least one refrigerant pipe (4) disposed therein, an outdoor fan (9) that is disposed in the vicinity of said outdoor heat exchanger (7) to make air flow to the outdoor heat exchanger, an engine (11) for driving the compressor (5), and a cooling circuit including a cooling-water heat exchanger (24 - 26) having at least one cooling water pipe (15) through which high-temperature cooling water heated by exhaust heat of the engine (11) flows while radiating the heat of the high-temperature cooling water, wherein said outdoor heat exchanger (7) and said cooling-water heat exchanger (24 - 26) are assembled to have a fin-and-tube structure, and said cooling water pipe (15) of said cooling water heat exchanger (24 - 26) is disposed at the downstream side of said refrigerant pipe (4) of said outdoor heat exchanger (24 - 26) with respect to the air flowing direction;
**characterized in that** said outdoor heat exchanger (7) and said cooling water heat exchanger (24 - 26) are formed separately from each other so that said cooling water pipe (15) and said refrigerant pipe (4) are mounted so as to penetrate through different fins, and
the interval (P2) of said fins of said cooling water heat exchanger (25) is set to be larger than the interval (P1) of said fins of said outdoor heat exchanger (24).

2. The heat pump type air conditioner as claimed in claim 1, wherein said cooling water heat exchanger (24-26) and said refrigerant heat exchanger (24) are fixed to each other by fixing means (31) so that said fins (28) of said cooling water heat exchanger (24-26) are located at the downstream side of said fins (27) of said refrigerant heat exchanger (24) with respect to the air flowing direction.

3. The heat pump type air conditioner as claimed in claim 2, wherein said fixing means (31) has a hook portion (31a) that can be hooked to said refrigerant pipe of said outdoor heat exchanger (24), and a base portion (31b) that can abut against the side surface of at least one fin of said cooling water heat exchanger (24-26), the fixing between said refrigerant heat exchanger (24) and said cooling water heat exchanger (24-26) being performed so that the cooling water heat exchanger (25) is clamped between said outdoor heat exchanger (24) and said base portion (31b) of said fixing means (31).

4. The heat pump type air conditioner as claimed in claim 1, further including a heat exchanger (20) for performing the heat exchange between the refrigerant at the suction side of said compressor (5) and the high-temperature cooling water heated by the exhaust heat of the engine (11) under heating operation to heat the refrigerant with the heat of the high-temperature cooling water.

5. The heat pump type air conditioner as claimed in claim 4, wherein said heat exchanger (20) comprises a plate type heat exchanger.

6. The heat pump type air conditioner as claimed in claim 1, wherein said fin-and-tube structure has plural refrigerant pipe arrays arranged in the air flowing direction, each refrigerant pipe array comprising plural refrigerant pipes (28), and at least one cooling water pipe array comprising plural cooling water pipes, all of said plural refrigerant pipe arrays being arranged at the upstream side of said cooling water pipe array in the air flowing direction.

## Patentansprüche

1. Klimaanlage (1) vom Wärmepumpentyp mit einem Kältemittelschaltkreis mit einem Kompressor (5), einem Innenwärmetauscher (12), einer Druck reduzierenden Vorrichtung (8), einem Außenwärmetauscher (7), der wenigstens eine Kältemittelleitung (4) darin angeordnet hat, einem Außengebläse (9), das in der Nähe des Außenwärmetauschers (7) angeordnet ist, um einen Luftstrom durch den Außenwärmetauscher zu erzeugen, einem Motor (11) zum Treiben des Kompressors (5) und einer Kühlschaltung, die einen Kühlwasser-Wärmetauscher (24-26) aufweist, der wenigstens eine Kühlwasserleitung (15) aufweist, durch welche Kühlwasser mit hoher Temperatur, das durch die Abgaswärme des Motors (11) erwärmt ist, fließt, wobei es die Wärme des Kühlwassers mit hoher Temperatur abstrahlt, wobei der Außenwärmetauscher (7) und der Kühlwasser-Wärmetauscher (24-26) so montiert sind, dass sie eine Rippen- und Rohrstruktur haben, und die Kühlwasserleitung (15) des Kühlwasser-Wärmetauschers (24-26) an der Stromabwärtsseite der Kältemittelleitung (4) des Außenwärmetauschers (24-26) mit Bezug auf die Luftströmungsrichtung angeordnet ist;
**dadurch gekennzeichnet, dass** der Außenwärmetauscher (7) und der Kühlwasser-Wärmetauscher (24-26) separat voneinander so ausgebildet sind, dass die Kühlwasserleitung (15) und die Kältemittelleitung (4) so montiert sind, dass sie durch unterschiedliche Rippen hindurchgehen, und
der Abstand (P2) der Rippen des Kühlwasser-Wärmetauschers (25) so bemessen ist, dass er größer als der Abstand (P1) der Rippen des Außenwärmetauschers (24) ist.

2. Klimaanlage vom Wärmepumpentyp nach Anspruch 1, **dadurch gekennzeichnet, dass** der Kühlwasser-Wärmetauscher (24-26) und der Kältemittel-Wärmetäuscher (24) aneinander mittels Befestigungsmitteln (31) so befestigt sind, dass die Rippen (29) des Kühlwasser-Wärmetauschers (24-26) an der stromabwärts liegenden Seite der Rippen (27) des Kältemittel-Wärmetauschers (24) bezogen auf die Luftströmungsrichtung liegen.

3. Klimaanlage vom Wärmepumpentyp nach Anspruch 2, wobei die Befestigungsmittel (31) einen Hakenteil (31a), der auf die Kältemittelleitung des Außenwärmetauschers (24) gehakt werden kann, und einen Basisteil (31b) haben, der an der Seitenfläche von wenigstens einer Rippe des Kühlwasser-Wärmetauschers (24-26) anschlagen kann, wobei die Befestigung zwischen dem Kältemittel-Wärmetauscher (24) und dem Kühlwasser-Wärmetauscher (24-26) so durchgeführt ist, dass der Kühlwasser-Wärmetauscher (25) zwischen dem Außenwärmetauscher (24) und dem Basisteil (31b) der Befestigungsmittel (31) geklemmt ist.

4. Klimaanlage vom Wärmepumpentyp nach Anspruch 1, weiterhin mit einem Wärmetauscher (20) zur Durchführung des Wärmetausches zwischen dem Kältemittel an der Ansaugseite des Kompressors (5) und dem Kühlwasser mit hoher Temperatur, das durch die Abgaswärme des Motors (11) erhitzt ist, bei Heizbetrieb, um das Kältemittel mit der Wärme des Kühlwassers mit hoher Temperatur zu erwärmen.

5. Klimaanlage vom Wärmepumpentyp nach Anspruch 4, wobei der Wärmetauscher (20) einen Wärmetauscher der Plattenbauart aufweist.

6. Klimaanlage vom Wärmepumpentyp nach Anspruch 1, wobei die Rippen- und Rohrstruktur mehrere Kältemittelrohrarrays hat, die in der Luftströmungsrichtung angeordnet sind, wobei jedes Kältemittelrohrarray eine Anzahl von Kältemittelrohren (28) aufweist und wenigstens ein Kühlwasserrohrarray eine Anzahl von Kühlwasserrohren aufweist, wobei alle der mehreren Kältemittelrohrarrays an der Stromaufwärtsseite des Kühlwasserrohrarrays in Luftströmungsrichtung angeordnet sind.

## Revendications

1. Climatiseur de type pompe à chaleur (1) comprenant un circuit de fluide frigorigène ayant un compresseur (5), un échangeur de chaleur intérieur (12), un dispositif de réduction de pression (8), un échangeur de chaleur extérieur (7) dans lequel est disposé au moins un tube de fluide frigorigène (4), un ventilateur extérieur (9) qui est disposé au voisinage du dit échangeur de chaleur extérieur (7) pour faire circuler l'air vers l'échangeur de chaleur extérieur, un moteur (11) pour entraîner le compresseur (5), et un circuit de refroidissement incluant un échangeur de chaleur d'eau de refroidissement (24-26) comportant au moins un tube d'eau de refroidissement (15) dans lequel l'eau de refroidissement à température élevée chauffée par la chaleur d'échappement du moteur (11) circule tout en rayonnant la chaleur de l'eau de refroidissement à température élevée , dans lequel le dit échangeur de chaleur extérieur (7) et le dit échangeur de chaleur d'eau de refroidissement (24-26) sont assemblés de manière à avoir une structure à tubes et ailettes, et le dit tube d'eau de refroidissement (15) du dit échangeur de chaleur d'eau de refroidissement (24-26) est disposé du côté aval du dit tube de fluide frigorigène (4) du dit échangeur de chaleur extérieur (24-26) avec référence à la direction de circulation d'air,
**caractérisé en ce que**
le dit échangeur de chaleur extérieur (7) et le dit échangeur de chaleur d'eau de refroidissement (24-26) sont formés séparément l'un de l'autre de sorte que le dit tube d'eau de refroidissement (15) et le dit tube de fluide frigorigène (4) sont montés de manière à traverser des ailettes différentes, et
l'intervalle (P2) des dites ailettes du dit échangeur de chaleur d'eau de refroidissement (25) est choisi de manière à être plus grand que l'intervalle (P1) des dites ailettes du dit échangeur de chaleur extérieur (24).

2. Climatiseur du type pompe à chaleur selon la revendication 1, dans lequel le dit échangeur de chaleur d'eau de refroidissement (24-26) et le dit échangeur de chaleur de fluide frigorigène (24) sont fixés l'un à l'autre par des moyens d'attache (31) de sorte que les dites ailettes (28) du dit échangeur de chaleur d'eau de refroidissement (24-26) sont placées en aval des dites ailettes (27) du dit échangeur de chaleur de fluide frigorigène (24) avec référence à la direction de circulation d'air.

3. Climatiseur du type pompe à chaleur selon la revendication 2, dans lequel le dit moyen de fixation (31) comprend une partie en forme de crochet (31a) qui peut être accrochée au dit tube de fluide frigorigène du dit échangeur de chaleur extérieur (24), et une partie de base (31b) qui peut buter contre la surface latérale d'au moins une ailette du dit échangeur de chaleur d'eau de refroidissement (24-26), la fixation entre le dit échangeur de chaleur de fluide frigorigène (24) et le dit échangeur de chaleur d'eau de refroidissement (24-26)) étant effectuée de sorte que l'échangeur de chaleur d'eau de refroidissement (25) soit bloqué entre le dit échangeur de chaleur extérieur (24) et la dite partie de base (31b) du dit moyen de fixation (31).

4. Climatiseur du type pompe à chaleur selon la revendication 1, comprenant en outre un échangeur de chaleur (20) pour effectuer l'échange de chaleur entre le fluide frigorigène du côté aspiration du dit compresseur (5) et l'eau de refroidissement à température élevée chauffée par la chaleur d'échappement du moteur (11) en mode de chauffage, pour chauffer le fluide frigorigène avec la chaleur de l'eau de refroidissement à température élevée.

5. Climatiseur du type pompe à chaleur selon la revendication 4, dans lequel le dit échangeur de chaleur (20) comprend un échangeur de chaleur du type à plaques.

6. Climatiseur du type pompe à chaleur selon la revendication 1, dans lequel la dite structure à tubes et ailettes comprend plusieurs ensembles de tubes de fluide frigorigène associés dans la direction de circulation de l'air, chaque ensemble de tubes de fluide frigorigène comprenant plusieurs tubes de fluide frigorigène (28), et au moins un ensemble de tubes d'eau de refroidissement comprenant plusieurs tubes d'eau de refroidissement, tous les ensembles de la dite pluralité d'ensembles de tubes de fluide frigorigène étant agencés du côté amont du dit ensemble de tubes d'eau de refroidissement dans la direction de circulation de l'air.
